# EUROPÄISCHE PATENTSCHRIFT

(11) **EP 1 623 628 B1**
(45) Veröffentlichungstag und Bekanntmachung des Hinweises auf die Patenterteilung: **10.09.2008**
(21) Anmeldenummer: 05005770.2
(22) Anmeldetag: 16.03.2005
(51) Int. Cl.: A22C 11/02

(54) **Verfahren und Vorrichtung zum Erkennen von Wursthüllenplatzern und/oder einem Wursthüllenende bei der Wurstproduktion**
Method and device for detecting burst and/or depletion of a sausage casing during sausage production
Méthode et dispositif de détection de l'éclatement et/ou de l'épuisement d'un boyau de saucisse pendant la production de saucisses

(30) Priorität: 06.08.2004 EP 04018708
(43) Veröffentlichungstag der Anmeldung: 08.02.2006
(73) Patentinhaber: Albert Handtmann Maschinenfabrik GmbH & Co. KG, 88400 Biberach (DE)
(72) Erfinder: Schrader, Wolfgang, 88400 Biberach (DE); Miller, Lothar, 88483 Burgrieden-Rot (DE)
(74) Vertreter: Grünecker, Kinkeldey, Stockmair & Schwanhäusser Anwaltssozietät

(56) Entgegenhaltungen:
- EP-A- 0 750 240
- DE-A1- 4 244 433
- US-A- 4 017 941
- US-A- 4 257 146
- US-A- 4 434 529

## Beschreibung

Die Erfindung betrifft ein Verfahren bzw. eine Vorrichtung zum Erkennen von Wursthüllenplatzern und/oder einem Wursthüllenende gemäß den Oberbegriffen der Patentansprüche 1 und 8.

Aus der EP 0 750 240 A1 werden ein solches Verfahren und eine solche Vorrichtung zum Detektieren einer Position auf einem Produkt gezeigt, wenn diese Position einen bestimmten Ort während des Transports erreicht. Aus der US 4,017,941 sind bereits ein Verfahren und eine Vorrichtung zum Befüllen einer Wursthülle bekannt, wobei ein Sensor vorgesehen ist, um die Bewegung des Zugendes einer Hülle auf dem Füllrohr zu detektieren.

Bei der Wurstproduktion wird eine schlauchförmige Wursthülle mit Wurstmasse befüllt, wobei die Wurstmasse aus einem Füllrohr in die Wursthülle hineingedrückt wird. Ein Vorrat an Wursthülle wird über das Füllrohr oder eine darauf angeordnete Hülse gezogen und gerafft (als so genannte Darmraupe), wobei die Falten der gerafften Hülle beim Füllen auseinander gezogen werden, so dass anschließend die Hülle glatt und eben das Füllgut umgibt. Insbesondere bei der Verwendung von Naturdärmen treten im Bereich des Füllrohrendes so genannte Wursthüllenplatzer bzw. Darmplatzer auf, die eine Unterbrechung der Wurstproduktion erzwingen. Derartige Wursthüllenplatzer müssen vom Bediener visuell oder durch Fühlen erkannt werden. Der Bediener muss dann möglichst schnell die Maschine stoppen. Dies bedingt, dass der Bediener ständig den Produktionsprozess beobachtet. Wenn ein Wursthüllenplatzer bzw. Darmplatzer zu spät erkannt wird, verschmutzt die Maschine stark und muss wieder zeitaufwändig gereinigt werden. Auch zur Erkennung des Wursthüllenendes muss der Bediener den Vorgang ständig überwachen. Bei der Verwendung von Naturdärmen werden überlappende Darmstücke auf dem Füllrohr angeordnet, die bei der Befüllung auseinander gezogen werden können, so dass ein exaktes Überwachen des Naturdarmendes notwendig ist. Insbesondere sollte das Darmende rechtzeitig erkannt werden, bevor es über das offene Ende des Füllrohrs abgezogen wird.

Es wurden bereits unterschiedliche Lösungen vorgeschlagen, bei denen Darmplatzer mit mechanischen Teilen erfasst werden können. Der Zustand dieser mechanischen Taster wird mit Sensoren und einer elektronischen Steuerung ausgewertet. Diese Systeme arbeiten jedoch sehr unzuverlässig, sind kompliziert und teuer.

In der Druckschrift DE 10015893 wurde bereits eine Lösung mit Abstandsensor- und Frequenzanalyse vorgeschlagen. Auch dieses System ist relativ kompliziert und kostenintensiv. Bislang konnte kein vorgeschlagenes Verfahren Darmplatzer bzw. Darmenden einfach und zuverlässig ermitteln. Insbesondere kann keines der bekannten Verfahren den gesamten Anwendungsbereich zuverlässig abdecken. Insbesondere bei Änderungen der Produktionsparameter, wie etwa Füllgeschwindigkeit, Durchmesser, Darmart, sind umfangreiche Anpassungsarbeiten (z.B. durch Teach-In) nötig.

Hiervon ausgehend liegt der vorliegenden Erfindung die Aufgabe zugrunde, ein Verfahren bzw. eine Vorrichtung bereitzustellen, die es auf einfache und zuverlässige Art und Weise ermöglichen, Wursthüllenplatzer und/oder Wursthüllenende beim Befüllen einer Wursthülle mit pastösem Gut festzustellen.

Erfindungsgemäß wird diese Aufgabe durch die Merkmale der Patentansprüche 1 und 8 gelöst.

Das erfindungsgemäße Messverfahren beruht auf der Tatsache, dass sich eine elektrische Kenngröße, wie beispielsweise der elektrische Widerstand bzw. Leitwert zwischen dem Fühlerkontakt und dem Füllrohr ändert, wenn die Wursthülle platzt oder wenn ein Darmende erreicht ist. Platzt die Wursthülle, so nimmt beispielsweise der ermittelte elektrische Widerstand, der mit Wursthülle mindestens 1000 Ω beträgt, drastisch auf z.B. <100 Ω ab, so dass aufgrund dieses Messwertes bestimmt werden kann, ob ein Wursthüllenplatzer und/oder -ende vorhanden ist oder nicht. Das erfindungsgemäße Verfahren bzw. die erfindungsgemäße Vorrichtung kann auf einfache Art und Weise kostengünstig realisiert werden und ermöglicht darüber hinaus, dass bereits vorhandene Anlagen auf einfache Art und Weise nachgerüstet werden können. Das erfindungsgemäße Verfahren bzw. die erfindungsgemäße Vorrichtung müssen nicht an geänderte Produktionsparameter angepasst werden.

Gemäß der vorliegenden Erfindung ist die elektrische Kenngröße die galvanische Spannung U_{G}, die aufgrund der Standardpotenzialdifferenz zwischen Fühlerkontakt und Füllrohr entsteht. Dabei bildet der Fühlerkontakt, die Wursthülle und das Füllrohr ein galvanisches Element, wobei das Füllrohr und der Fühlerkontakt als Elektroden dienen und der Darm als Elektrolytträger dient. Aufgrund des leitenden Darms ist eine lonenwanderung zwischen Fühlerkontakt und Füllrohr möglich, so dass sich aufgrund der Standardpotenzialdifferenz zwischen den Elektroden eine Spannung aufbauen kann, die erfasst wird, wobei auf der Grundlage dieser Kenngröße ermittelt werden kann, ob ein Wursthüllenplatzer oder ein Wursthüllenende vorliegt. Befindet sich kein Darm mehr zwischen den Metallen, entsteht ein Kurzschluss, d.h., die Spannungsdifferenz ist Null. Somit lässt sich auf einfache Art und Weise ein Wursthüllenplatzer und/oder Wursthüllenende ermitteln, ohne dass eine Messspannung angelegt werden muss.

Erfindungsgemäß kann die elektrische Kenngröße zusätzlich ein Widerstand, eine Spannung oder eine Stromstärke sein. Das bedeutet, dass entweder direkt eine Widerstandsmessung der Wursthülle auf dem Füllrohr durchgeführt wird, oder aber der Spannungsabfall bzw. der Strom durch die Wursthülle auf das Füllrohr ermittelt wird.

Wenn erfasst wird, dass die elektrische Kenngröße ein unendlich großer Widerstand bzw. eine entsprechende Spannung oder ein entsprechender Strom ist, wird ein Signal ausgegeben, das anzeigt, dass ein Fühlerkontaktfehler vorliegt.

Der Fühlerkontakt kann entweder an einer Stelle in Ausstoßrichtung hinter einer Darmbremse die elektrische Kenngröße abtasten und/oder an einer Stelle vor der Darmbremse. Wird der Fühlerkontakt in Ausstoßrichtung hinter der Darmbremse angeordnet, so kann in zuverlässiger Art und Weise ein Wursthüllenplatzer erkannt werden. Soll hingegen das Wursthüllenende erkannt werden, so ist es vorteilhaft, den Fühlerkontakt vor der Darmbremse anzuordnen, so dass das Ende des Darmes frühzeitig erkannt werden kann.

Gemäß einer besonderen Ausführungsform der vorliegenden Erfindung kann dann in einer Auswerteeinheit die elektrische Kenngröße mit einem Schwellwert verglichen werden. Wenn die erfasste elektrische Kenngröße dann einen Schwellwert über- bzw. unterscheitet, kann ein Stoppsignal erzeugt werden, das den Befüllvorgang stoppt, so dass es zu keinen Verschmutzungen kommt.

Gemäß einem bevorzugten Verfahren wird ein Signal erzeugt, das anzeigt, dass ein Fühlerkontaktfehler vorliegt, wenn die ermittelte galvanische Spannung Null ist.

Gemäß einer besonderen Ausführungsform kann eine elektrische Kenngröße sowohl auf der Grundlage des Widerstands zwischen Fühlerkontakt und Füllrohr ermittelt werden und gleichzeitig kann eine elektrische Kenngröße aufgrund der galvanischen Spannung zwischen Fühlerkontakt und Füllrohr ermittelt werden. Die gleichzeitige Kombination der beiden Verfahren ist vorteilhaft, da ohne Umschalten beide Messwerte zur Verfügung stehen können. Dies ist insbesondere deshalb vorteilhaft, da die galvanische Spannung nicht für Kunstdärme anwendbar ist, die trocken sind und somit nicht als Elektrolyt dienen, so dass sich keine Spannung zwischen Füllrohr und Fühlerkontakt aufbauen kann. Mit dieser Kombination beider Messverfahren lässt sich auch bei Naturdärmen leicht unterscheiden, ob der Fühlerkontakt vom Füllrohr isoliert ist oder ob der Fühlerkontakt das Füllrohr direkt berührt. In beiden beschriebenen Fällen ist die galvanische Spannung allein nicht aussagekräftig, weil beide Male Null Volt resultieren. Im Kombination mit der Widerstandsmessung ist eine eindeutige Aussage möglich.

Bei einer erfindungsgemäßen Vorrichtung ist der Fühlerkontakt vorzugsweise als Schleifkontakt ausgebildet, so dass sich die in Ausschubrichtung bewegende Wursthülle unter dem Fühlerkontakt bewegen kann und sich darüber hinaus das Füllrohr unter dem Kontakt drehen kann, ohne die Wursthülle zu beschädigen.

Bei der Vorrichtung und bei dem Verfahren, bei dem die elektrische Kenngröße aufgrund der sich entwickelnden galvanischen Spannung zwischen Füllrohr und Fühlerkontakt ermittelt wird, ist es vorteilhaft, wenn das Fühlermaterial ein kleineres Standardpotenzial aufweist als das Material des Füllrohrs. So zersetzt sich durch elektrochemische Abläufe im Laufe der Zeit der Fühlerkontakt und nicht das Füllrohr.

Wenn die Vorrichtung ein geerdetes Maschinengestell aufweist, wobei das Füllrohr in leitendem Kontakt zum Maschinengestell steht, kann das negative Potenzial des Maschinengestells als Bezugspotenzial für die Messspannung dienen. Dies bringt den Vorteil mit sich, dass die Sensoreinrichtung lediglich eine Leitung zum Fühlerkontakt hin benötigt, während die Masserückleitung vom Füllrohr gespart werden kann, da die Masseführung über das Maschinengestell erfolgt.

Wenn jedoch das Füllrohr nicht in leitendem Kontakt zum Maschinengestell steht, ist eine Masserückleitung am Füllrohr notwendig, so dass ein weiterer leitender Kontakt, vorzugsweise Schleifkontakt zum Füllrohr notwendig ist.

Vorteilhafterweise weist die Vorrichtung weiter eine Anzeige auf, die anzeigt, ob eine Wursthülle in Ordnung ist oder nicht, und zwar in Abhängigkeit der gemessenen elektrischen Kenngröße.

Die vorliegende Erfindung ermöglicht die einfache Verwendung einer Sensoreinrichtung zum Messen einer elektrischen Kenngröße mit einem entsprechenden Fühlerkontakt für die Wursthülle auf einem Füllrohr, um so auf einfache Art und Weise Wurstplatzer bzw. Darmende festzustellen.

Die vorliegende Erfindung wird nachfolgend unter Bezugnahme der beiliegenden Zeichnungen näher erläutert.
- Fig. 1: zeigt schematisch einen Schnitt durch eine Vorrichtung, hilfreich zum Verständnis der vorliegenden Erfindung.
- Fig. 2: zeigt schematisch einen Schnitt durch eine weitere Ausführungsform, hilfreich zum Verständnis der vorliegenden Erfindung.
- Fig. 3: zeigt ein Ersatzschaltbild für die Spannungsmessung in der in Fig. 2 gezeigten Vorrichtung.
- Fig. 4: zeigt einen Schnitt durch eine Vorrichtung, hilfreich zum Verständnis der vorliegenden Erfindung.
- Fig. 5: zeigt einen Signalzeitplan, der das Messsignal in Abhängigkeit der Zeit darstellt.
- Fig. 6: zeigt schematisch einen Schnitt durch eine Vorrichtung gemäß einem Ausführungsbeispiel gemäß der vorliegenden Erfindung.
- Fig. 7: zeigt das in Figur 6 gezeigte Ausführungsbeispiel mit rückströmender Wurstmasse.
- Fig. 8: zeigt einen Signalzeitplan für das in Figur 6 gezeigte Ausführungsbeispiel, der das Messsignal in Abhängigkeit der Zeit darstellt.
- Fig. 9: zeigt einen Schnitt durch das in Figur 6 gezeigte Ausführungsbeispiel einschließlich der Auswerteeinheit und Anzeige.
- Fig. 10: zeigt schematisch einen Schnitt durch ein weiteres Ausführungsbeispiel.

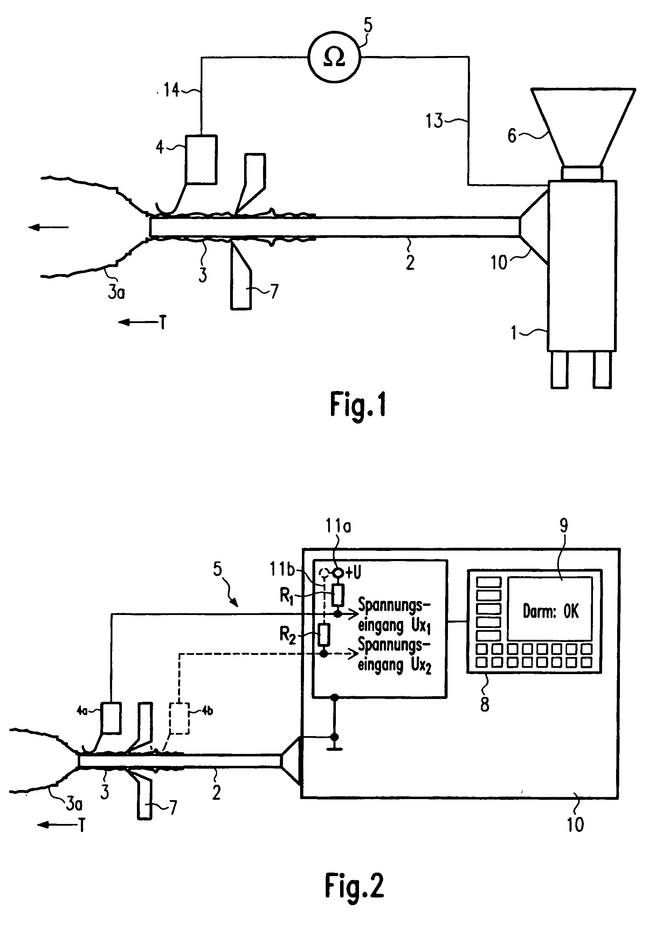

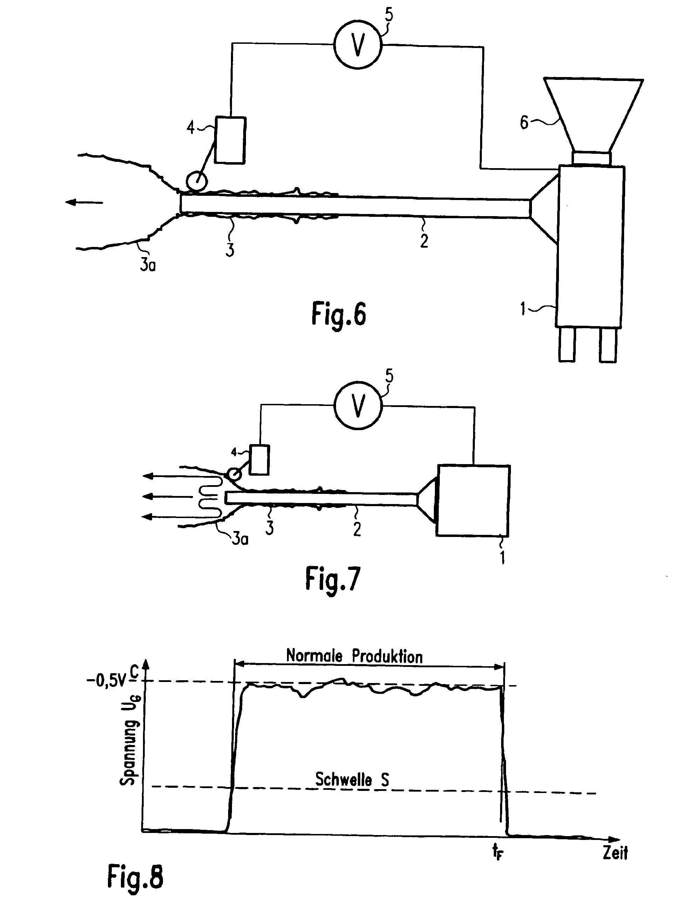

Die Fig. 1-5 beschreiben ein erstes Messprinzip, das hilfreich zum Verständnis der vorliegenden Erfindung ist, wobei die Erfindung nachfolgend in Zusammenhang mit den Fig. 6-10 beschrieben wird.

Wie aus Fig. 1 hervorgeht, umfasst die erfindungsgemäße Vorrichtung eine Fülleinheit 1 mit einem entsprechenden Trichter 6 und einem Füllrohr 2 sowie einer Darmbremse 7 zum Befüllen einer Wursthülle 3 mit pastösem Gut, z.B. einer Wurst mit Wurstbrät. Das Füllrohr 2 ist über einen nicht näher dargestellten Füllrohrdrehantrieb, der an einem Maschinengestell 10 befestigt ist, um seine Längsachse drehbar gelagert. Das Füllrohr 2 weist in bekannter Weise eine Darmbremse 7 mit einem entsprechenden Bremsring auf, durch die die auf dem Füllrohr 2 geraffte Wursthülle 3 durch den Füllgutausstoß abgezogen wird. Die Darmbremse 7 bzw. deren Bremsring kann über ein Bremsringgetriebe synchronisiert mit dem Füllrohr 2 drehend angetrieben werden. Das Bremsringgetriebe kann so verschwenkt werden (nicht dargestellt), dass das Ende des Füllrohrs 2 zum Aufziehen einer neuen Wursthülle 3 oder zum Reinigung freigelegt wird.

Im Betrieb wird pastöses Gut in bekannter Weise in Transportrichtung T durch das Füllrohr 2 in die Wursthülle 3 gedrückt. Der gefüllte Wurststrang 3a wird dann über eine nicht gezeigte Transporteinrichtung, wie beispielsweise einer Längeneinheit mit Transportbändern in Richtung T mit einer bestimmten Geschwindigkeit vom Füllrohr 2 abgezogen.

Gemäß der vorliegenden Erfindung weist die Vorrichtung weiter eine Sensoreinrichtung 5 auf zum Erfassen einer elektrischen Kenngröße Rₓ, Uₓ, Iₓ für die auf dem Füllrohr 2 aufgezogene geraffte Wursthülle 3. In diesem Beispiel umfasst die Sensoreinrichtung 5 ein Ohmmeter zur Bestimmung des elektrischen Widerstandes Rₓ für die auf dem Füllrohr aufgezogene Wursthülle. Als elektrische Kenngröße muss jedoch nicht der elektrische Widerstand der Wursthülle gemessen werden, sondern es kann auch, wie nachfolgend im Zusammenhang mit Fig. 2 näher erläutert wird, ein Spannungsabfall an der Wursthülle auf dem Füllrohr als Kenngröße bestimmt werden. Die Sensoreinrichtung 5 ist mit einer entsprechenden Leitung 14 mit einem Fühlerkontakt 4 verbunden, der auf der gerafften Wursthülle 3 auf dem Füllrohr 2 aufliegt. Der Fühlerkontakt 4 ist hier als Schleifkontakt ausgebildet, so dass sich die geraffte Wursthülle unter dem Schleifkontakt 4 in Transportrichtung T hindurch bewegen kann. Außerdem kann sich das Füllrohr 2 unter dem Fühlerkontakt 4 um seine Längsachse drehen. Dazu ist der Fühlerkontakt 4 federnd ausgebildet. Der Fühlerkontakt 4 kann beispielsweise ein Stahlfederkontakt sein oder aus einem leitenden Kunststoff geformt sein. Bei diesem Ausführungsbeispiel ist der Fühlerkontakt 4 in Transportrichtung T, d.h. in Ausstoßrichtung des Füllguts, hinter der Darmbremse 7 angeordnet und eignet sich daher besonders gut zum Erkennen von Darmplatzern, die insbesondere an dem den Füller 1 abgewandten Ende des Füllrohrs 2 auftreten. Aus diesem Grund befindet sich der Fühlerkontakt 4 vorzugsweise in diesem Endbereich. Die Sensoreinrichtung 5 weist weiter eine Leitung 13 zum geerdeten Maschinengestell 10 auf, das in leitendem Kontakt zum Füllrohr 2 steht. Weil das Füllrohr 2 leitenden Kontakt zum Maschinengestell 10 hat, kann auf einen weiteren Schleifkontakt auf dem Füllrohr 2 verzichtet werden, da das Maschinengestell als Bezugspotenzial für die Messung verwendet wird.

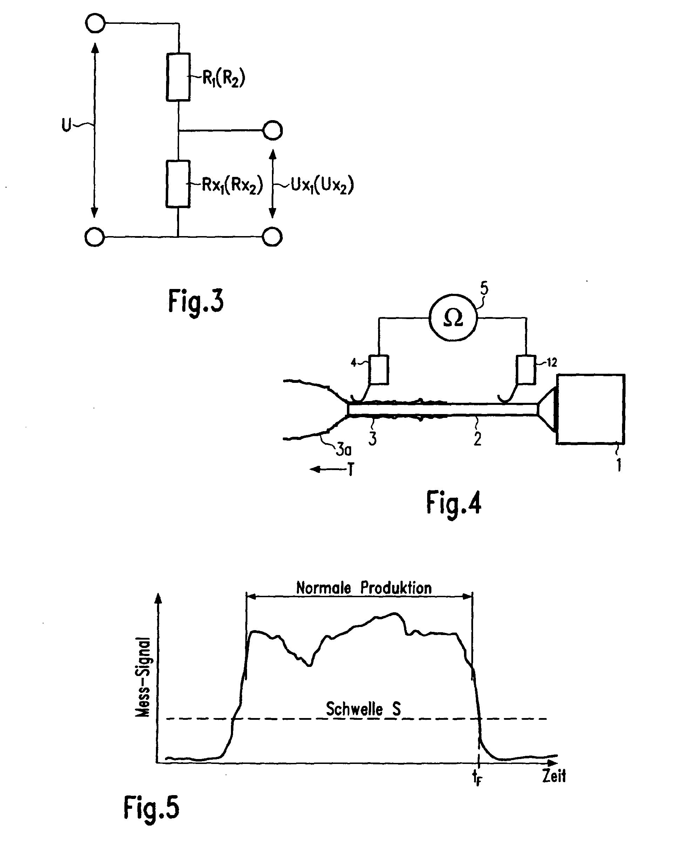

Ist das Füllrohr 2 elektrisch isoliert, so muss das Füllrohr 2 über einen weiteren Kontakt 12, hier einen zweiten Schleifkontakt 12, mit der Sensoreinrichtung 5 verbunden werden, wie in Fig. 4 dargestellt.

Es ist hier vorteilhaft, auch hier einen Schleifkontakt zu verwenden, da sich das Füllrohr 2 um seine Längsachse drehen kann, so dass keine feste Verbindung zum Füllrohr 2 möglich ist. Zum Messen der elektrischen Kenngröße der Wursthülle 3 wird gemäß der vorliegenden Erfindung eine Spannung zwischen Fühlerkontakt 4 und Füllrohr 2 angelegt.

Das Messverfahren beruht darauf, dass sich die gemessene elektrische Kenngröße für die auf dem Füllrohr aufgezogene Wursthülle bei Wursthüllenplatzern oder einem Wursthüllenende ändert. Beispielsweise weist eine Wursthülle 3, z.B. hier ein Naturdarm, einen elektrischen Widerstand von mindestens etwa 1000 Ω auf. Eine Messung des Widerstands mit der in Fig. 1 gezeigten Sensoreinrichtung 5 würde zu einem Messergebnis von etwa 1000 Ω bei intakter Wursthülle 3 führen. Im Gegensatz dazu führt der direkte Kontakt des Messfühlers 4 zum Füllrohr 2 zu einem wesentlich geringeren Widerstand von <100 Ω. Das bedeutet, dass durch Erfassen einer elektrischen Kenngröße für die Wursthülle, wie etwa den elektrischen Widerstand oder einer entsprechenden Spannung oder Stromstärke, eine Aussage darüber gemacht werden kann, ob eine Wursthülle vorhanden ist oder nicht, oder ob ein Wursthüllenplatzer vorliegt oder nicht.

Die Vorrichtung kann weiter eine in Fig. 1 nicht näher dargestellte Auswerteeinheit 8 aufweisen, in der ein Schwellwert S eingegeben werden kann. Da der Wert der Kenngröße (Uₓ, Rₓ, Iₓ) von der Beschaffenheit der Wursthülle und anderen Parametern abhängt, kann der Schwellwert S vom Maschinenbediener manuell der aktuellen Situation angepasst werden.

Alternativ kann der Schwellwert S während der Produktion aus den dabei laufend gewonnenen Werten der Kenngröße in der Steuerung durch einen Algorithmus berechnet und so automatisch der aktuellen Situation angepasst werden. Dieses selbstlernende adaptive Verfahren entbindet den Maschinenbediener weitgehend von Anpassungsarbeiten. Dadurch sollen Fehlerkennungen verhindert oder zumindest reduziert werden.

Fig. 5 zeigt einen Signal-Zeitplan, der das Messsignal, hier beispielsweise den ermittelten Widerstand Rₓ, in Abhängigkeit der Zeit t zeigt. Liegt das Messsignal oberhalb der Schwelle S, so stellt die Auswerteeinheit 8 fest, dass die Produktion normal verläuft, wobei kein Wursthüllenplatzer vorliegt und auch kein Wursthüllenende. Fällt zum Zeitpunkt t_{F} das Messsignal unter die Schwelle S ab, so erkennt die Auswerteeinheit 8 eine Störung, d.h. z.B. einen Wursthüllenplatzer oder ein Wursthüllenende. Die Auswerteeinheit 8 kann dann ein entsprechendes Signal an die nicht dargestellte Steuerung des Füllers 1 geben, die wiederum den Befüllungsvorgang umgehend stoppt. Somit ist sichergestellt, dass bei Störungen kein weiteres Füllgut mehr austritt und somit eine Verschmutzung der Maschine verhindert wird. Die Spannung, die zur Messung der elektrischen Kenngröße angelegt wird, kann eine Gleichspannung sein oder aber auch eine Mess-Wechselspannung. Die Verwendung einer Wechselspannung kann eventuell auftretende Elektrolyseeffekte zwischen Fühlerkontakt 4 und Füllrohr 2 bzw. zwischen Füllrohr 2 und Maschinengestell 10 wirkungsvoll verhindern. Darüber hinaus kann die Auswahl einer geeigneten Frequenz bzw. Wellenform dieser Wechselspannung die Erkennungssicherheit eines Störfalls verbessern.

Wird eine Störung festgestellt, kann dies darüber hinaus in einer entsprechenden Anzeige 9 (siehe Fig. 2) angezeigt werden.

Wird von der Sensoreinrichtung 5 ein unendlich großer Widerstand, z.B. »100 kΩ, festgestellt, so stellt die Auswerteeinrichtung 5 fest, dass ein Sensoreinrichtungsfehler vorliegt, d.h. beispielsweise ein beschädigter Fühlerkontakt 4. Es kann eine entsprechende Fehlermeldung auf der Anzeige 9 erfolgen.

Fig. 2 zeigt ein weiteres Beispiel, das im Wesentlichen dem in der Fig. 1 gezeigten Beispiel entspricht, wobei die Änderung des Widerstandwertes zwischen Fühlerkontakt 4a und Füllrohr 2 über eine entsprechende Änderung des Spannungsabfalls gemessen wird. Bei der technischen Realisierung ist die Messung eines Spannungswertes Uₓ einfacher als eine direkte Widerstandsmessung. Wie aus der Fig. 2 hervorgeht, wird hier zwischen dem Füllrohr 2, das in leitendem Kontakt zum Maschinengestell 10 steht, das wiederum geerdet ist, und dem Fühlerkontakt 4a über einen bekannten Widerstand R₁ eine Messspannung U angelegt. Hier ist das Füllrohr wie erwähnt leitend mit dem Maschinengestell verbunden, es ist jedoch ebenfalls möglich, einen weiteren Schleifkontakt 12, wie in Zusammenhang mit Fig. 4 näher erläutert wurde, anzuordnen. Wie aus dem Ersatzschaltbild, das in Fig. 3 gezeigt ist, hervorgeht, kann die Spannung Uₓ₁ abgegriffen werden, die zwischen dem Fühlerkontakt 4a, der gerafften Wursthülle 3 und dem Füllrohr 2 abfällt. Da der Widerstandswert des Fühlerkontakts 4, des Füllrohrs 2 und der entsprechenden Leitungen gering ist (da diese leitend ausgebildet sind), und da diese Werte darüber hinaus konstante Größen sind, können sie für die Beurteilung der Änderung der zu ermittelnden elektrischen Kenngröße vernachlässigt werden. Das bedeutet, dass die abgegriffene Spannung Uₓ₁ in einem arithmetischen Bezug zum elektrischen Widerstand der Wursthülle 3 steht, d. h. Uₓ₁ = U * Rₓ₁ / (Rₓ₁ + R₁). Die Spannung Uₓ₁ wird dann an die Auswerteeinheit 8 weitergeleitet, die das entsprechende Messsignal, wie zuvor in Zusammenhang mit Fig. 5 erläutert, mit einem bestimmten Schwellwert S vergleicht, wobei, wie zuvor beschrieben, bei einer Abweichung des Messsignals von dem Schwellwert S die Auswerteeinheit 8 ermittelt, dass eine Störung vorliegt. Liegt beispielsweise ein Wursthüllenplatzer oder ein Wursthüllenende vor, so steht der Fühlerkontakt 4a zumindest kurzzeitig in direktem Kontakt zum Füllrohr 2, so dass der Widerstandswert bzw. die abfallende Spannung Uₓ₁ einem Wert entspricht, der sich aus dem Widerstandswert des Fühlerkontakts 4a und des Füllrohrs 2 sowie der entsprechenden Leitungen ergibt und somit deutlich geringer ist als entsprechende Werte bei intakter Wursthülle.

Der Fühlerkontakt 4a ist, wie aus Fig. 2 hervorgeht, in Transportrichtung T hinter der Darmbremse 7 angeordnet, und ist somit, wie zuvor beschrieben, insbesondere zum Erfassen von Wursthüllenplatzern geeignet. Alternativ dazu oder zusätzlich kann ein Fühlerkontakt 4b vorgesehen werden, der in Transportrichtung T vor der Darmbremse 7 angeordnet ist, und ebenso wie der zuvor beschriebene Fühlerkontakt 4a aufgebaut ist. Ein Fühlerkontakt 4b, der vor der Darmbremse 7 angeordnet ist, eignet sich insbesondere zum rechtzeitigen Erkennen des Wursthüllenendes. Ebenso wie bei dem Fühlerkontakt 4a wird auch hier über einen bekannten Widerstand R₂ eine Messspannung U zwischen Fühlerkontakt 4b und Füllrohr 2 angelegt. Die abgegriffene Spannung Uₓ₂ steht ebenso, wie zuvor erläutert, zu dem elektrischen Widerstand der Wursthülle 3 in Beziehung, wobei sich auch hier ergibt Uₓ₂ = U * Rₓ₂ / (Rₓ₂ + R₂).

Werden zwei Fühlerkontakte 4a, 4b verwendet, so beurteilt die Auswerteeinheit 8, dass ein Wursthüllenende erreicht ist, wenn die elektrische Kenngröße Uₓ₂, die über den Fühlerkontakt 4b ermittelt wird, unter die Schwelle S₂ abfällt, und dass ein Darmplatzer vorliegt, wenn die von dem Fühler 4a ermittelte elektrische Kenngröße Uₓ₁ unter einen Schwellwert S₁ abfällt. Die Schwellwerte für die Fühler 4a und 4b müssen nicht gleich sein. Dies kann z. B. herrühren aus einem unterschiedlichen mechanischen Aufbau auf Grund von geometrischen Gegebenheiten. In jedem Fall gibt dann die Auswerteeinheit 8 ein entsprechendes Signal an die Maschinensteuerung, um den Befüllungsvorgang zu stoppen. Eine entsprechende Anzeige erfolgt an der Anzeige 9.

Wird von der Auswerteeinheit 8 ein unendlich hoher Durchgangswiderstand »100 kΩ bzw. ein entsprechender Spannungs- oder Stromwert festgestellt, so stellt die Auswerteeinheit 8 fest, dass ein Fehler an dem entsprechenden Fühlerkontakt 4a oder 4b oder gegebenenfalls 12 vorliegt und gibt ein entsprechendes Signal zur Anzeige dieses Fehlers auf der Anzeigeeinheit 9 aus.

Somit kann durch Erfassen einer elektrischen Kenngröße (Uₓ, Rₓ, Iₓ), die arithmetisch zum Widerstand der Wursthülle 3 in Beziehung steht, ermittelt werden, um so auf der Grundlage dieser Widerstandsänderung ein entsprechendes Signal auszugeben, das anzeigt, ob ein Wursthüllenplatzer vorliegt und/oder ein Signal auszugeben, das anzeigt, dass ein Wursthüllenende vorliegt.

Die Figuren 1 bis 5 betreffen ein erstes Messprinzip, bei dem die elektrische Kenngröße auf der Grundlage des sich ändernden Widerstands zwischen Fühlerkontakt 4 und Füllrohr 2 ermittelt wird.

Nachfolgend soll nun ein weiteres Messprinzip im Zusammenhang mit den Figuren 6 bis 10 beschrieben werden, das der vorliegenden Erfindung entspricht und bei dem die elektrische Kenngröße U_{G} auf der Grundlage der Spannung ermittelt wird, die sich zwischen Fühlerkontakt 4 und Füllrohr 2 aufgrund der Standardpotenzialdifferenz zwischen den Materialien des Füllrohrs und des Sensorkontakts aufbaut.

Dieses Verfahren bzw. diese Vorrichtung entspricht im Wesentlichen dem im Zusammenhang mit den Figuren 1 bis 5 beschriebenen Verfahren und Vorrichtung mit Ausnahme der Sensoreinrichtung 5 sowie der Auswerteeinheit 8. Gleiche Komponenten und Verfahrensschritte werden für dieses Messprinzip nicht eigens beschrieben und es wird hierbei auf die Beschreibung des ersten Messprinzips verwiesen.

Die Figur 6 zeigt schematisch einen Schnitt durch ein Ausführungsbeispiel gemäß dem weiteren Messprinzip der vorliegenden Erfindung, wobei ebenso wie bei dem in den Figuren 1 bis 5 gezeigten Beispiel ein Fühlerkontakt 4 auf dem auf ein Füllrohr 2 aufgezogenen Darm aufliegt. Der Fühlerkontakt 4 ist mit einem Spannungsmessgerät 5 verbunden, das mit der geerdeten Fülleinheit 1 verbunden ist, die in leitendem Kontakt zum Füllrohr steht. Weil das Füllrohr 2 in leitendem Kontakt zum Füller 1, z. B zu dessen Maschinengestell hat, kann auf einen weiteren Kontakt auf dem Füllrohr 2 verzichtet werden, da das Maschinengestell als Bezugspotenzial für die Messung verwendet wird. Ist das Füllrohr 2 elektrisch isoliert, so muss das Füllrohr 2 über einen weiteren Kontakt 12, wie auch im Zusammenhang mit Figur 4 beschrieben wurde, mit der Sensoreinrichtung 5 verbunden werden. Dann kann ein zweiter Schleifkontakt verwendet werden. Der Fühlerkontakt 4 ist ebenso wie bei den vorherigen Ausführungsformen als Schleifkontakt ausgebildet, damit sich die Wursthülle unter dem Kontakt 4 hinweg bewegen kann. Der Fühlerkontakt 4 besteht aus einem anderen Material als das Füllrohr. Hierbei ist wichtig, dass das Material des Fühlerkontakts 4 ein anderes Standardpotenzial aufweist, als das Material des Füllrohres 2, d.h. eine andere Position in der elektrochemischen Spannungsreihe einnimmt. Vorzugsweise besteht der Fühlerkontakt 4 aus einem Material, das ein kleineres Standardpotenzial aufweist als das Füllrohr. Wenn das Füllrohr beispielsweise aus Edelstahl (V2A) gefertigt ist, sollte der Fühlerkontakt aus einem unedleren Metall gefertigt werden. So zerstört sich durch die elektrochemischen Abläufe im Laufe der Zeit der Fühlerkontakt und nicht das V2A-Füllrohr.

Vorzugsweise wird als Fühlerkontakt beispielsweise Aluminium verwendet, das ein negatives Standardpotenzial aufweist und demnach als Elektronendonator dient. Vorzugsweise ist das Fühlerkontaktmaterial, das zuvor beschrieben wurde, als Hülse beispielsweise als Aluminiumhülse ausgebildet und über ein elastisches Material, wie beispielsweise Federstahl oder Gummi angedrückt. D.h., als Verbindung zum Fühlerkontakt 4, der in direktem Kontakt mit dem Darm 3 steht, kann dann leitfähiger Kunststoff, leitfähiger Gummi oder Fehlerstahl verwendet werden. Somit ist gewährleistet, dass sich der Darm unter dem Fühlerkontakt 4 hindurch bewegen kann.

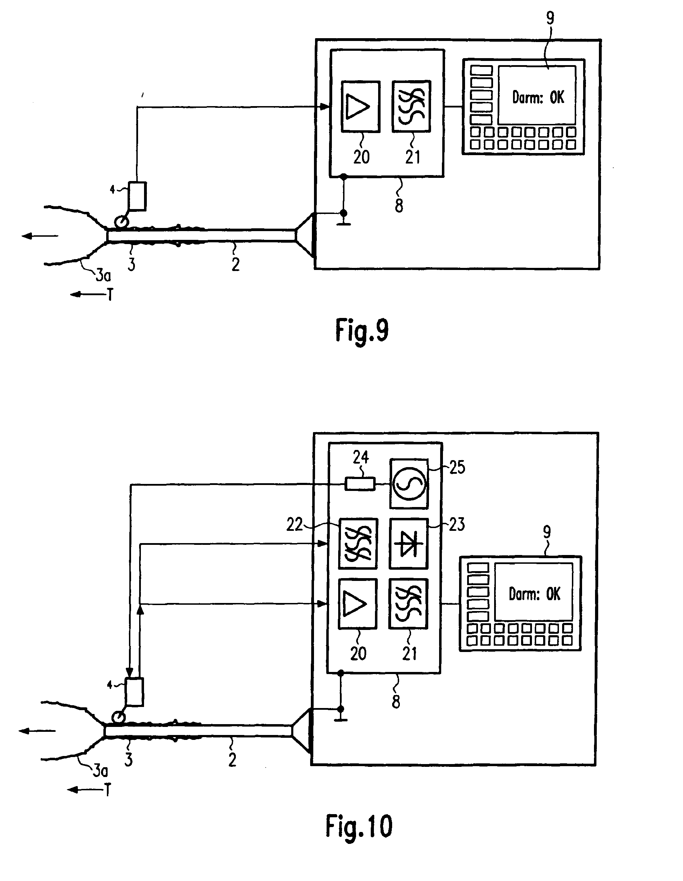

Bei diesem Messprinzip wird der Fühlerkontakt 4, der Darm 3 sowie das Füllrohr 2 als galvanische Zelle betrachtet. Der Fühlerkontakt 4 sowie das Füllrohr 2 dienen als Elektroden und der Darm dazwischen dient als Elektrolytträger. Somit ist eine lonenwanderung zwischen dem Füllrohr 2 und dem Fühlerkontakt 4 möglich. Durch den als Elektrolyt wirkenden Darm baut sich somit eine galvanische Spannung U_{G} zwischen dem Fühlerkontakt 4 und dem Füllrohr 2 auf, die nahezu konstant bleibt solange sich der Darm 3 zwischen den beiden Elektroden befindet. Befindet sich kein Darm mehr zwischen dem Fühlerkontakt 4 und dem Füllrohr 2, beispielsweise aufgrund eines Darmplatzers oder aufgrund eines Wursthüllenendes, so kommt es zu einem "Kurzschluss", so dass die Potenzialdifferenz Null beträgt. Bei diesem Verfahren dient also die Spannung, die sich zwischen Füllrohr 2 und Fühlerkontakt 4 aufbaut, als elektrische Kenngröße U_{G}. Die Spannung U_{G} wird durch ein Spannungsmessgerät 5 gemessen und wie in Figur 9 dargestellt ist, durch einen Verstärker 20 zur einfacheren Verarbeitung verstärkt, wobei Rauschanteile mit einem Tiefpassfilter 21 entfernt werden.

Bei diesem Messverfahren wird also, wie auch aus dem Signalzeitplan der Figur 8 hervorgeht, die Spannung U_{G} gemessen, die sich zwischen dem Füllrohr 2 und dem Fühlerkontakt 4 aufbaut, wenn der zu befüllende Darm 3 sich unter dem Fühlerkontakt 4 in Transportrichtung T bewegt. Die verstärkte und gefilterte Spannung U_{G} bleibt nahezu konstant bestehen, solange sich der Darm zwischen den beiden Elektroden befindet.

Auch, wie aus Figur 7 hervorgeht, wenn der Fühlerkontakt durch rückströmende Wurstmasse (salzhaltiges Brät) angehoben und somit die Auflagefläche vergrößert wird, was wiederum zu einer Widerstandsverringerung führt, ergibt sich keine negative Auswirkung auf die Signalqualität, so dass das Signal im Wesentlichen konstant bleibt. Die erfasste elektrische Kenngröße U_{G} wird mit einem vorab festgelegten Schwellwert S verglichen. Fällt die elektrische Kenngröße U_{G} unterhalb eines bestimmten Schwellwertes, so wird eine Störung von der Auswerteeinheit 8 erkannt und ein entsprechendes Fehlersignal ausgegeben, das beispielsweise den Füllvorgang stoppt, wie auch näher im Zusammenhang mit der Figur 5 beschrieben wurde. Ein Unterschreiten des Schwellwertes erfolgt dann, wenn der Darm komplett abgezogen wird oder abreißt, so dass der Fühlerkontakt hier auf dem blanken Füllrohr 2 aufliegt.

Die Schwelle wird so festgelegt, dass sie etwas unter dem erwarteten Wert für einen ungestörten Darmabzug liegt. Dadurch sollen Fehlerkennungen verhindert und reduziert werden. Ein beschädigter Fühlerkontakt 4 kann z.B. ebenfalls durch das Fehlen einer Spannung beim Start der Produktion festgestellt und dementsprechend angezeigt werden.

Die im Zusammenhang mit den Figuren 6 bis 9 gezeigte Vorrichtung bzw. das entsprechende Verfahren ist jedoch nicht für Kunstdärme geeignet, da diese trocken sind und somit nicht als Elektrolytträger dienen können, so dass sich keine Spannung zwischen Füllrohr 2 und Fühlerkontakt 4 aufbauen kann. Für derartige Wursthüllen ist es sinnvoll, das im Zusammenhang mit den Figuren 1 bis 5 gezeigte Messprinzip bzw. die entsprechende Vorrichtung, die die elektrische Kenngröße auf der Grundlage des sich verändernden Widerstands zwischen Füllrohr und Fühlerkontakt 4 ermittelt, zu verwenden. Ideal ist jedoch eine gleichzeitige Kombination beider Verfahren, wie näher im Zusammenhang mit Figur 10 erläutert wird, da dann ohne Umschalten beide Messverfahren zur Verfügung stehen. Wie aus Figur 10 hervorgeht, weist eine derartige Vorrichtung zur Ermittlung der Kenngröße durch das "Widerstandsmessvertahren" eine Einrichtung zum Anlegen einer Spannung 25 auf, beispielsweise einen Wechselstromgenerator (z. B. 10 KHz), dem ein Vorwiderstand 24 nachgeschaltet ist, der wiederum mit dem Fühlerkontakt 4 verbunden ist. Vom Fühlerkontakt 4 läuft eine Messsignalleitung einerseits zu einem Verstärker 20 und einem Filter 21. Vom Filter 21 aus wird das Messsignal dem Voltmeter 5 zugeführt, so dass, wie im Zusammenhang mit den Figuren 6 und 9 erläutert wurde, die Potenzialdifferenz zwischen Füllrohr 2 und Fühlerkontakt 4 ermittelt werden kann. Das Messsignal wird weiter gleichzeitig an einen Filter 22 geleitet und einem Gleichrichter 23 zugeführt, wonach eine Kenngröße auf der Grundlage des sich verändernden Widerstands zwischen Füllrohr 2 und dem Fühlerkontakt 4 bestimmt wird, wie beispielsweise im Zusammenhang mit dem Widerstandsmessverfahren, das in den Figuren 1 bis 5 beschrieben wurde, ermittelt wird. Beide Kenngrößen werden dann mit entsprechenden Schwellwerten S, wie zuvor beschrieben, verglichen, wobei, wenn eine der ermittelten Kenngrößen den Schwellwert unterschreitet oder überschreitet, ein entsprechendes Fehlersignal ausgegeben wird, das einen Wursthüllenplatzer und/oder ein Wursthüllenende anzeigt und ggf. den Füllvorgang stoppt. Mit dieser Kombination beider Messverfahren lässt sich auch bei Naturdärmen leicht unterscheiden, ob der Fühlerkontakt vom Füllrohr 2 isoliert ist (z.B. Füllrohr ausgeschwenkt oder Fühlerkontakt......) oder ob der Sensor das Füllrohr direkt berührt. In beiden beschriebenen Fällen ist die Spannung allein nicht aussagekräftig, weil beide Male Null Volt resultieren. In Kombination mit der "Widerstandsmessung" ist eine eindeutige Aussage möglich:

| Sensor | Fehlt | Berührt Füllrohr | Liegt auf Darm |
|---|---|---|---|
| Widerstand | Unendlich | Null | 3000hm- IOkOhm |
| Galvanische Spannung | OVolt | OVolt | Ca. -0,5 V bei Aluminiumsensor |

Bei diesem Ausführungsbeispiel wird also, wie zuvor beschrieben, der vom Sensorelement erzeugten Spannung (DC ca. -0,5 V) eine Wechselspannung (AC, f=10kHZ) aufgeprägt. Durch die Innenwiderstände bildet sich eine Summe dieser beiden Spannungen. Mit den entsprechenden Filtern können die beiden Komponenten wieder getrennt werden. So können in der Steuerung die Zustände "Darm vorhanden", "Sensorkontakt liegt auf Füllrohr" und "Keine Verbindung zwischen Sensor und Füllrohr bzw. Wursthülle (Sensor defekt)" sicher voneinander unterschieden werden.

## Patentansprüche

1. Verfahren zum Erkennen von Wursthüllenplatzern und/oder einem Wursthüllenende beim Befüllen einer Wursthülle (3) mit pastösem Gut, das von einem Füllrohr (2) ausgestoßen wird, mit folgenden Schritten:
Erfassen einer elektrischen Kenngröße (Uₓ, Rₓ, Iₓ, U_{G}) für die auf dem Füllrohr (2) aufgezogene Wursthülle (3),
Ermitteln, ob ein Wursthüllenplatzer und/oder ein Wursthüllenende vorliegt auf der Grundlage dieser elektrischen Kenngröße (Uₓ, Rₓ, Iₓ, U_{G}),
**dadurch gekennzeichnet, dass**
als elektrische Kenngröße (U_{G}) die galvanische Spannung (U_{G}) ermittelt wird, die aufgrund der Standardpotenzialdifferenz zwischen Fühlerkontakt (4) und Füllrohr (2) entsteht.

2. Verfahren nach Anspruch 1,
**dadurch gekennzeichnet, dass**
zum Erfassen der galvanischen Spannung (U_{G}) ein elektrisch leitender Fühlerkontakt (4) auf der Wursthülle (3) aufliegt.

3. Verfahren nach mindestens einem der Ansprüche 1 oder 2,
**dadurch gekennzeichnet, dass**
die erfasste galvanischen Spannung (U_{G}) mit einem Schwellwert (S) verglichen wird.

4. Verfahren nach Anspruch 3,
**dadurch gekennzeichnet, dass**,
wenn die erfasste galvanischen Spannung (U_{G}) den Schwellwert (S) unter- bzw. überschreitet, ein Stoppsignal erzeugt wird, das den Befüllvorgang stoppt.

5. Verfahren nach mindestens einem der Ansprüche 1 bis 4,
**dadurch gekennzeichnet, dass**
der Fühlerkontakt (4) an einer Stelle in Ausstoßrichtung hinter einer Darmbremse (7) die elektrische Kenngröße abtastet und/oder an einer Stelle vor der Darmbremse (7).

6. Verfahren nach Anspruch 1,
**dadurch gekennzeichnet, dass**
wenn als elektrische Kenngröße (U_{G}) eine Spannung U_{G} = 0 ist gleich Null festgestellt wird, ein Signal erzeugt wird, das anzeigt, dass ein Fühlerkontaktfehler vorliegt.

7. Verfahren nach mindestens dem Patentanspruch 2,
**dadurch gekennzeichnet, dass**
auch eine elektrische Kenngröße (Uₓ, Rₓ, Iₓ) auf der Grundlage des Widerstandes zwischen Fühlerkontakt (4) und Füllrohr (2) ermittelt und gleichzeitig die Kenngröße (U_{G}) auf der Grundlage der Potenzialdifferenz zwischen Fühlerkontakt (4) und Füllrohr (2) ermittelt wird.

8. Vorrichtung zum Durchführen des Verfahrens nach Anspruch 1, mit einem Füllrohr (2) zum Ausstoß von pastösem Gut in eine Wursthülle (3), umfassend:
eine Sensoreinrichtung (5) zum Erfassen einer elektrischen Kenngröße (Uₓ, Rₓ, Iₓ, U_{G}) für die auf dem Füllrohr (2) aufgezogene Wursthülle (3) und
eine Auswerteeinheit (8), die auf der Grundlage der erfassten Kenngröße (Uₓ, Rₓ, Iₓ) bestimmt, ob ein Wursthüllenplatzer und/oder ein Wursthüllenende vorliegt,
**dadurch gekennzeichnet, dass**
die Sensoreinrichtung (5) eine Einrichtung umfasst, die als elektrische Kenngröße die galvanische Spannung U_{G} erfasst, die auf der Grundlage der Standardpotenzialdifferenz zwischen Fühlerkontakt (4) und Füllrohr (2) entsteht.

9. Vorrichtung nach Anspruch 8,
**dadurch gekennzeichnet, dass**
die Sensoreinrichtung (5) derart ausgelegt ist, dass als elektrische Kenngröße auch ein Widerstand (Rₓ), eine Spannung (Uₓ, U_{G}) oder ein entsprechender Strom (Iₓ) erfasst werden kann.

10. Vorrichtung nach einem der Ansprüche 8 oder 9,
**dadurch gekennzeichnet, dass**
die Sensoreinrichtung (5) einen Fühlerkontakt (4) umfasst, der auf der Wursthülle (3) aufliegt.

11. Vorrichtung nach einem der Ansprüche 8 bis 10,
**dadurch gekennzeichnet, dass**
der Fühlerkontakt (4) an einer Stelle in Ausstoßrichtung hinter einer Darmbremse (7) angeordnet ist und/oder vor der Darmbremse (7).

12. Vorrichtung nach mindestens einem der Ansprüche 8 bis 11,
**dadurch gekennzeichnet, dass**
der Fühlerkontakt (4) als Schleifkontakt ausgebildet ist.

13. Vorrichtung nach Anspruch 21,
**dadurch gekennzeichnet, dass**
der Fühlerkontakt ein Fühlermaterial umfasst, das ein kleineres Standardpotenzial aufweist als das Material des Füllrohrs.

14. Vorrichtung nach einem der Ansprüche 10 bis 13,
**dadurch gekennzeichnet, dass**
die Vorrichtung weiter ein geerdetes Maschinengestell (10) aufweist, das Füllrohr (2) in leitendem Kontakt zum Maschinengestell (10) steht, so dass das negative Potenzial des Maschinengestells (10) als Bezugspotenzial für die Messspannung dient.

15. Vorrichtung nach mindestens einem der Ansprüche 8 bis 14,
**dadurch gekennzeichnet, dass**
die Sensoreinrichtung (5) einen weiteren leitenden Kontakt (12) zum Füllrohr (2) aufweist.

16. Vorrichtung nach mindestens einen der Ansprüche 8 bis 15,
**dadurch gekennzeichnet, dass**
die Auswerteeinheit (8) ein Stoppsignal ausgibt, das den Befüllvorgang stoppt, wenn ein Wursthüllenplatzer und/oder ein Darmende erfasst wird.

17. Vorrichtung nach mindestens einem der Ansprüche 8 bis 16,
**dadurch gekennzeichnet, dass**
die Auswerteeinheit (8) mindestens einen Schwellwert (Sₙ) gespeichert hat, wobei die Auswerteeinheit (8) die galvanische Spannung (U_{G}) mit dem Schwellwert (Sₙ) vergleicht.

18. Vorrichtung nach mindestens einem der Ansprüche 8 bis 17,
**dadurch gekennzeichnet, dass**
die Vorrichtung weiter eine Anzeige (9) umfasst, die anzeigt, ob eine Wursthülle in Ordnung ist oder nicht, und zwar in Abhängigkeit der gemessenen Kenngröße (Uₓ, Rₓ, U_{G}, Iₓ).

19. Vorrichtung nach Anspruch 10,
**dadurch gekennzeichnet, dass**
die Sensoreinrichtung (5) derart ausgebildet ist, dass sie eine Kenngröße auf der Grundlage des sich ändernden Widerstandes zwischen Fühlerkontakt (4) und Füllrohr (2) ermittelt und gleichzeitig eine Kenngröße auf der Grundlage der galvanischen Spannung ermittelt, die sich aufgrund der Standardpotenzialdifferenz zwischen Füllrohr (2) und Fühlerkontakt (4) ergibt.

## Claims

1. Method for recognising breaks in sausage skins and/or a sausage skin end when filling a sausage skin (3) with paste-like material discharged from a filling tube (2) having the following steps:
measurement of a characteristic electric variable (Uₓ, Rₓ, Iₓ, U_{G}) for the sausage skin (3) pulled up on the filling tube (2),
determining whether a break in the sausage skin and/or a sausage skin end is present on the basis of this characteristic electric variable (Uₓ, Rₓ, Iₓ, U_{G}),
**characterised in that**
for the characteristic electric variable (U_{G}) the galvanic voltage (U_{G}) that is produced due to the standard potential difference between the sensor contact (4) and the filling tube (2) is determined.

2. Method according to claim 1, **characterised in that** for measuring the galvanic voltage (U_{G}) an electrically conductive sensor contact (4) rests on the sausage skin (3).

3. Method according to at least one of claims 1 or 2, **characterised in that** the measured galvanic voltage (U_{G}) is compared with a threshold value (S).

4. Method according to claim 3, **characterised in that** when the measured galvanic voltage (U_{G}) is less than or exceeds the threshold value (S) a stop signal is generated which stops the filling operation.

5. Method according to at least one of claims 1 to 4, **characterised in that** the sensor contact (4) senses the characteristic electric variable at a point behind a sausage skin brake (7) in the discharge direction and/or at a point ahead of the sausage skin brake (7).

6. Method according to claim 1, **characterised in that** when for the characteristic electric variable (U_{G}) a voltage U_{G} = 0 is found to be equal to zero a signal is generated that indicates that there is a sensor contact error.

7. Method according to at least claim 2 of the patent, **characterised in that** a characteristic electric variable (Uₓ, Rₓ, Iₓ) is also determined on the basis of the resistance between the sensor contact (4) and the filling tube (2) and simultaneously the characteristic variable (U_{G}) is determined on the basis of the potential difference between the sensor contact (4) and the filling tube (2).

8. Device for carrying out the method according to claim 1, having a filling tube (2) for discharging paste-like material into a sausage skin (3) comprising:
a sensor device (5) for measuring a characteristic electric variable (Uₓ, Rₓ, Iₓ, U_{G}) for the sausage skin (3) pulled up on the filling tube (2) and
an evaluating unit (8) which on the basis of the measured characteristic variable (Uₓ, Rₓ, Iₓ) determines whether a break in the sausage skin and/or a sausage skin end is present,
**characterised in that**
the sensor device (5) comprises a device which for the characteristic electric variable measures the galvanic voltage U_{G} that is produced on the basis of the standard potential difference between the sensor contact (4) and the filling tube (2).

9. Device according to claim 8, **characterised in that** the sensor device (5) is designed in such a way that for the characteristic electric variable a resistance (Rₓ), a voltage (Uₓ, U_{G}) or a corresponding current (Iₓ) can also be measured.

10. Device according to one of claims 8 or 9, **characterised in that** the sensor device (5) comprises a sensor contact (4) that rests on the sausage skin (3).

11. Device according to any of claims 8 to 10, **characterised in that** the sensor contact (4) is arranged at a point behind a sausage skin brake (7) in the discharge direction and/or ahead of the sausage skin brake (7).

12. Device according to at least one of claims 8 to 11, **characterised in that** the sensor contact (4) is constructed as a wiping contact.

13. Device according to claim 12, **characterised in that** the sensor contact comprises a sensor material that has a smaller standard potential than the material of the filling tube.

14. Device according to any of claims 10 to 13, **characterised in that** the device further comprises an earthed machine frame (10) and the filling tube (2) is in conductive contact with the machine frame (10) so that the negative potential of the machine frame (10) serves as reference potential for the measured voltage.

15. Device according to at least one of claims 8 to 14, **characterised in that** the sensor device (5) comprises another conductive contact (12) to the filling tube (2).

16. Device according to at least one of claims 8 to 15, **characterised in that** the evaluating unit (8) issues a stop signal which stops the filling operation when a break in the sausage skin and/or a sausage skin end is detected.

17. Device according to at least one of claims 8 to 16, **characterised in that** the evaluating unit (8) compares the galvanic voltage (U_{G}) with the threshold value (Sₙ).

18. Device according to at least one of claims 8 to 17, **characterised in that** the device further comprises a display (9) which displays whether a sausage skin is in order or not, this being done as a function of the measured characteristic variable (Uₓ, Rₓ, U_{G}, Iₓ).

19. Device according to claim 10, **characterised in that** the sensor device (5) is constructed in such a way that it determines a characteristic variable on the basis of the changing resistance between the sensor contact (4) and filling tube (2) and simultaneously determines a characteristic variable on the basis of the galvanic voltage resulting from the standard potential difference between the filling tube (2) and sensor contact (4).

## Revendications

1. Procédé de détection de l'éclatement et/ou de l'épuisement de boyaux de saucisses lors du remplissage d'un boyau (3) par du produit pâteux, éjecté par un tube de remplissage (2), comprenant les étapes suivantes :
détection d'un paramètre caractéristique électrique (Uₓ, Rₓ, Iₓ, U_{G}) pour le boyau de saucisse (3) tiré sur le tube de remplissage (2),
détermination de la présence d'un éclatement et/ou épuisement du boyau de saucisse sur la base de ce paramètre caractéristique électrique (Uₓ, Rₓ, Iₓ, U_{G}),
**caractérisé en ce que**
le paramètre caractéristique électrique (U_{G}) déterminé est la tension galvanique (U_{G}), créée en raison de la différence de potentiel de référence fondamental entre un contact de capteur (4) et le tube de remplissage (2).

2. Procédé suivant la revendication 1
**caractérisé en ce que**
un contact de capteur (4) conducteur électriquement s'applique sur le boyau de saucisse (3) pour détecter la tension galvanique (U_{G}).

3. Procédé suivant l'une au moins des revendications 1 et 2,
**caractérisé en ce que**
la tension galvanique détectée (U_{G}) est comparée à une valeur de seuil (S).

4. Procédé suivant la revendication 3,
**caractérisé en ce que**
un signal d'arrêt, qui stoppe l'opération de remplissage, est produit lorsque la tension galvanique détectée (U_{G}) dépasse par le bas ou par le haut la valeur de seuil (S).

5. Procédé suivant l'une au moins des revendications 1 à 4,
**caractérisé en ce que**
le contact de capteur (4) analyse le paramètre caractéristique électrique en un point, dans la direction d'éjection, en aval d'un frein de boyau (7) et/ou en un point en amont du frein de boyau (7).

6. Procédé suivant la revendication 1,
**caractérisé en ce que**
un signal, qui indique la présence d'une erreur de contact de capteur, est produit lorsque le paramètre caractéristique électrique constaté (U_{G}) est une tension U_{G} = 0.

7. Procédé suivant au moins la revendication 2,
**caractérisé en ce que**
un paramètre caractéristique électrique (Uₓ, Rₓ, Iₓ) est également déterminé sur la base de la résistance entre le contact de capteur (4) et le tube de remplissage (2) et le paramètre caractéristique (U_{G}) est simultanément déterminé sur la base de la différence de potentiel entre le contact de capteur (4) et le tube de remplissage (2).

8. Dispositif pour la mise en oeuvre du procédé suivant la revendication 1, avec un tube de remplissage (2) pour l'éjection de produit pâteux dans un boyau de saucisse (3), comprenant :
un dispositif de détection (5) pour détecter un paramètre caractéristique électrique (Uₓ, Rₓ, Iₓ, U_{G}) pour le boyau de saucisse (3) tiré sur le tube de remplissage (2), et
une unité d'évaluation (8), qui détermine sur la base du paramètre caractéristique détecté (Uₓ, Rₓ, Iₓ) la présence d'un éclatement et/ou d'un épuisement du boyau de saucisse,
**caractérisé en ce que**
le dispositif de détection (5) comprend un dispositif, qui détecte en tant que paramètre caractéristique électrique la tension galvanique (U_{G}), créée sur la base de la différence de potentiel de référence fondamental entre le contact de capteur (4) et le tube de remplissage (2).

9. Dispositif suivant la revendication 8,
**caractérisé en ce que**
le dispositif de détection (5) est conçu de telle sorte qu'une résistance (Rₓ), une tension (Uₓ, U_{G}) ou un courant correspondant (Iₓ) peuvent être également détectés en tant que paramètre caractéristique électrique.

10. Dispositif suivant l'une des revendications 8 et 9,
**caractérisé en ce que**
le dispositif de détection (5) comprend un contact de capteur (4), qui s'applique sur le boyau de saucisse (3).

11. Dispositif suivant l'une des revendications 8 à 10,
**caractérisé en ce que**
le contact de capteur (4) est disposé en un point, dans la direction d'éjection, en aval d'un frein de boyau (7) et/ou en amont du frein de boyau (7).

12. Dispositif suivant l'une au moins des revendications 8 à 11,
**caractérisé en ce que**
le contact de capteur (4) est réalisé sous forme de contact glissant.

13. Dispositif suivant la revendication 21,
**caractérisé en ce que**
le contact de capteur comprend un matériau, qui présente un potentiel de référence fondamental plus faible que le matériau du tube de remplissage.

14. Dispositif suivant l'une des revendications 10 à 13,
**caractérisé en ce que**
le dispositif comporte en outre un bâti de machine (10) mis à la terre, le tube de remplissage (2) est en contact conducteur avec le bâti de machine (10), de sorte que le potentiel négatif du bâti de machine (10) sert de potentiel de référence pour la tension de mesure.

15. Dispositif suivant l'une au moins des revendications 8 à 14,
**caractérisé en ce que**
le dispositif de détection (5) présente un autre contact conducteur (12) par rapport au tube de remplissage (2).

16. Dispositif suivant l'une au moins des revendications 8 à 15,
**caractérisé en ce que**
l'unité d'évaluation (8) émet un signal d'arrêt qui stoppe l'opération de remplissage, lorsqu'un éclatement et/ou un épuisement de boyau est détecté.

17. Dispositif suivant l'une au moins des revendications 8 à 16,
**caractérisé en ce que**
l'unité d'évaluation (8) a mémorisé au moins une valeur de seuil (Sₙ), l'unité d'évaluation (8) comparant la tension galvanique (U_{G}) à la valeur de seuil (Sₙ).

18. Dispositif suivant l'une au moins des revendications 8 à 17,
**caractérisé en ce que**
le dispositif comprend en outre un affichage (9), qui indique si un boyau de saucisse est conforme ou pas, à savoir en fonction du paramètre caractéristique mesuré (Uₓ, Rₓ, U_{G}, Iₓ).

19. Dispositif suivant la revendication 10,
**caractérisé en ce que,**
le dispositif de détection (5) est réalisé de telle sorte qu'il détermine un paramètre caractéristique sur la base de la résistance variable entre le contact de capteur (4) et le tube de remplissage (2), et détermine simultanément un paramètre caractéristique sur la base de la tension galvanique, qui résulte de la différence de potentiel de référence fondamental entre le tube de remplissage (2) et le contact de capteur (4).
